# EUROPEAN PATENT APPLICATION

(11) **EP 3 730 931 A1**
(43) Date of publication of application: **28.10.2020**
(21) Application number: 20020187.9
(22) Date of filing: 20.04.2020
(51) Int. Cl.: G01N 21/954, F16L 55/26

(54) **IMAGE DETECTION SYSTEM**

(30) Priority: 23.04.2019 TW 108114398
(71) Applicant: National Chung Shan Institute of Science and Technology, Taoyuan City 325 (TW)
(72) Inventor: HUANG, KER-JER, 335 Taoyuan City (TW); TSAI, Deng-Horng, Taoyuan City 337 (TW); HUANG, Huan-Jang, New Taipei City 235 (TW); HUANG, Sheng-Hsin, Taipei City 100 (TW); LIU, Bang-Yuan, Taoyuan City 326 (TW); WANG, Ruei-Teng, Taoyuan City 335 (TW); LIN, Yu-Bo, Taoyuan City 325 (TW); CHANG, Ching-Hsing, Taoyuan City 326 (TW)
(74) Representative: Wende, Christian Werner

(57) **Abstract**

An image detection system, for detecting conditions inside a hole or a tube, the system comprises a body (41), comprising a rod body (21) having a detection terminal (44a) and a control terminal (44b), and at least one fixing unit (45) fixed at the rod body (21); a movement module (42), provided between the detection terminal (44a) and the control terminal (44b); and a detection module (43), provided at the detection terminal (44a) of the rod body (21), the detection module (43) comprising a plurality of imaging units (431), a detection unit and a control unit (432), wherein the imaging units (431) are arranged at the detection terminal (44a) in a manner of surrounding the rod body (21), the imaging units (431) obtain images inside the hole or the tube, the movement module (42) moves the body (41) inside the hole or the tube, and the detection unit obtains size and position information of a detection target, thereby achieving detection and measurement of damaged holes or cracks inside the hole or the tube, or conditions inside the hole or the tube.

## Description

### BACKGROUND OF THE INVENTION

### 1. Field of the Invention

The present invention relates to an image detection system, and more particularly to an image detection system for detecting conditions inside a hole or a tube.

### 2. Description of the Related Art

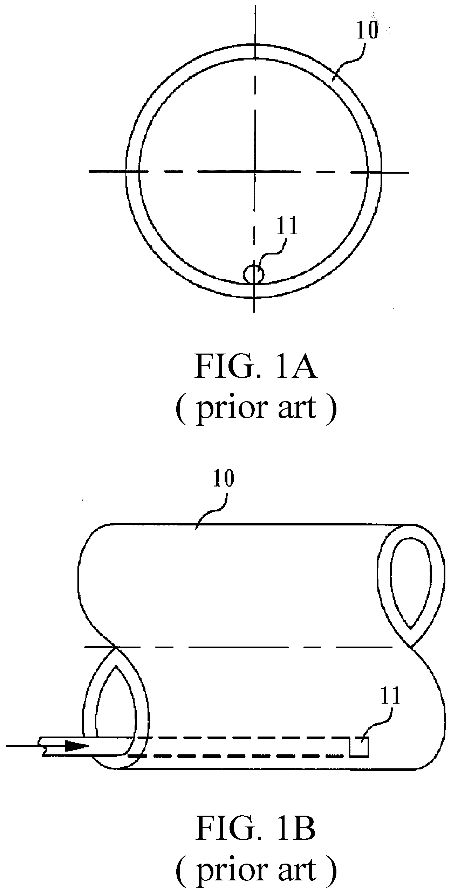

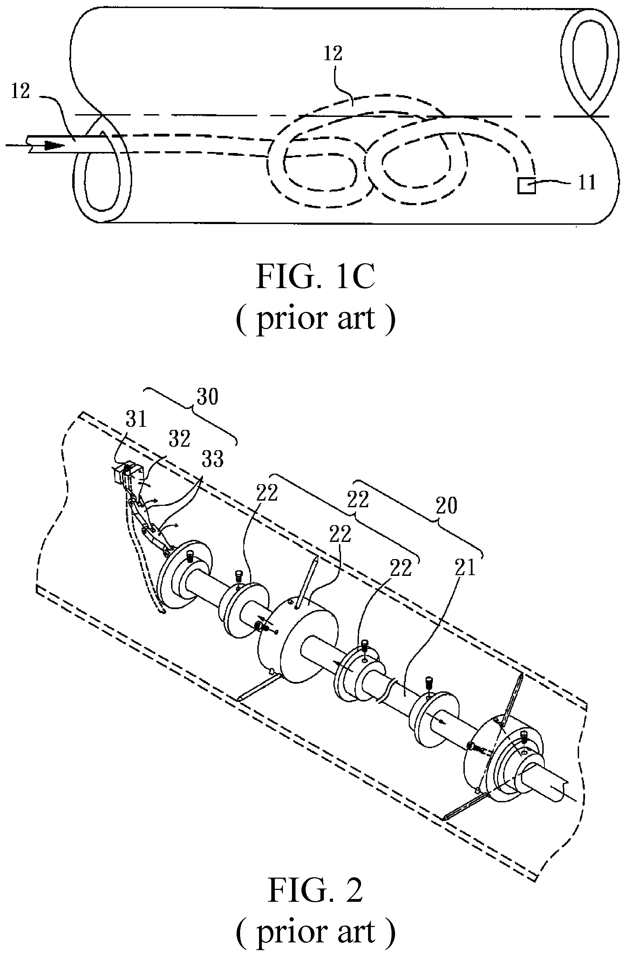

FIG. 1A to 1C are schematic diagram of a conventional detection process for a large-diameter tube. As shown, the technology performs detection for a large-diameter tube by using an endoscope, an endoscope lens is extended to the inside of the tube (as shown in FIG. 1A and FIG. 1B), and an optical fiber cable 12 of the endoscope 11 is flexible. However, during the operation of the large-diameter tube 10, as the endoscope 11 enters the tube 10 while the endoscope 11 progresses horizontally in the large-diameter tube 10, the flexible optical fiber cable 12 may turnabout in place (as shown in FIG. 1C) due to the friction between the optical fiber cable 12 and the wall of the tube, such that the optical fiber cable 12 cannot move forward any further, hence affecting the detection operation inside the tube. Further, also due to the flexibility of the optical fiber cable 12, the endoscope lens connected to the optical fiber cable 12 may be affected by weight during the inspection of the large-diameter tube 10, in a way that the lens drops and cannot be accurately positioned because of the weight, and the distance between the endoscope 11 and the surface inside the tube cannot be kept fixed, further resulting in a blurry detection image.

FIG. 2 shows a schematic diagram of an auxiliary inspection device for an endoscope with a large-diameter tube of the Taiwan Patent No. M359306. As shown in the drawing, the device includes a handle assembly 20 and a lens assembly 30. The handle assembly 20 includes a rod body 21 and at least two fixing assemblies 22 fixed at the rod body 21. The lens assembly 30 includes an endoscope lens 31, a support portion 32 for fixing the endoscope lens 31, and at least one node portion 33. The rod body 21 is for holding of an operator and supporting the endoscope lens 31. The rod body 21 is kept near the position of the central axis of the large-diameter tube by the fixing assemblies 22. The first node of the node portion 33 is connected to the support portion 32 and the last node is disposed on the handle assembly 20, and the capturing angle and focus of the endoscope lens 31 are adjusted through the node 33. The configuration above solves the issue of the optical fiber cable being incapable of moving forward or being twisted as a result of friction as described above. However, the length of the rod body also needs to be increased as the test distance increases, such that a user may not be able to hold the rod body properly or full-range inspection may not be effectively achieved because of the rod body.

### BRIEF SUMMARY OF THE INVENTION

In view of the drawbacks of the prior art above, it is an object of the present invention to provide an image detection system, in which a detection module is moved in a hole or a tube by a movement module, thereby achieving the goal of detecting and measuring damaged holes or cracks inside the hole or the tube, or conditions inside the hole or the tube.

It is another object of the present invention to provide an image detection system, which achieves the goal of detecting size and position information of a target by moving a movement module in a hole or a tube.

To achieve the above objects, the present invention provides an image detection system for detecting conditions on the inside of a hole or a tube. The system includes a body, a movement module and a detection module. The body is a rod body having a detection terminal and a control terminal. The movement module is provided between the detection terminal and the control terminal. The detection module is provided at the detection terminal of the rod body, and includes a plurality of imaging units, a detection unit and a control unit. The imaging units are arranged at the detection terminal in a manner of surrounding the rod body. The imaging units obtain images on the inside of the hole or the tube, the movement module moves the body in the hole or the tube, and the detection unit obtains size and position information of a detection target, thereby achieving the object of detection and measurement of damaged holes or cracks inside the hole or the tube, or conditions inside the hole or the tube.

### BRIEF DESCRIPTION OF THE DRAWINGS

FIG. 1A is a schematic diagram of a conventional detection process for a large-diameter tube.
FIG. 1B is a schematic diagram of a conventional detection process for a large-diameter tube.
FIG. 1C is a schematic diagram of a conventional detection process for a large-diameter tube.
FIG. 2 is a schematic diagram of an auxiliary inspection device for an endoscope with a large-diameter tube of the Taiwan Patent No. M359306.
FIG. 3 is a structural diagram of an image detection system of the present invention.
FIG. 4 is a schematic diagram of a detection module of an image detection system of the present invention.
FIG. 5 is a schematic diagram of a lighting unit of an image detection system of the present invention.

### DETAILED DESCRIPTION OF THE INVENTION

Implementation details of the present invention are given in specific embodiments below. A person skilled in the art could understand other advantages and effects of the present invention on the basis of the disclosure of the description.

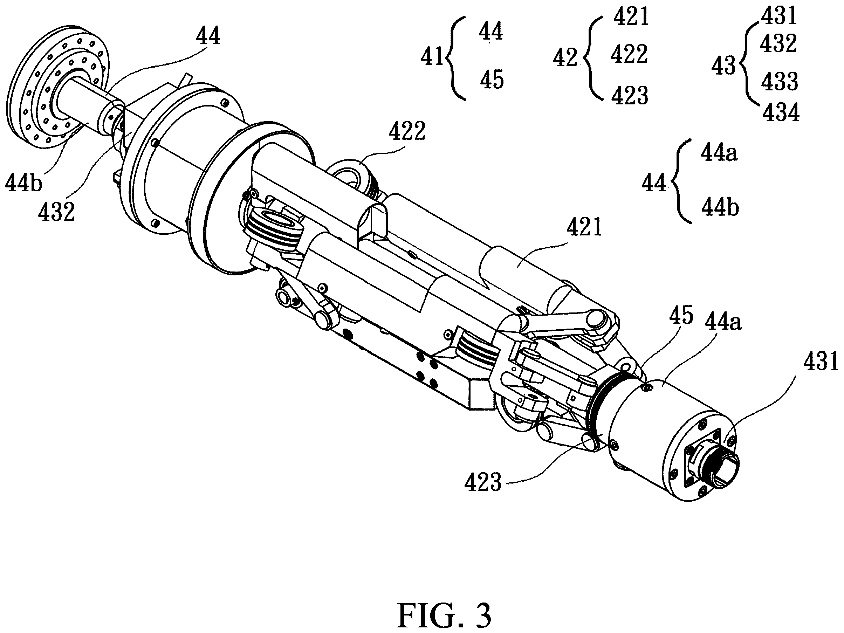

FIG. 3 shows a structural schematic diagram of an image detection system of the present invention. As shown in the drawing, the image detection system of the present invention is an image detection system for detecting conditions inside a hole or a tube, and includes a body 41, a movement module 42 and a detection module 43. The body 41 includes a rod body 44 having a detection terminal 44a and a control terminal 44b, and at least one fixing unit 45 fixed at the rod body 44. The movement module 42 is provided between the detection terminal 44a and the control terminal 44b. The detection module 43 is provided at the detection terminal 44a of the rod body 44, and includes a plurality of imaging units 431 and a control unit 432. The movement module 42 includes at least one link rod unit 421, a plurality of rollers 422 provided on one end of the link rod unit 421, and a driver unit 423 connected to the rollers 422. During detection, the link rod unit 421 may be adjusted according to the size of the hole or the tube, so as to place the body 41 at the center position of the hole or the tube. The control unit 432 is electrically connected to the movement module 42 and the detection module 43, and obtains images inside the hole or the tube by using the imaging units 431. By adhering the rollers 422 with the inner wall of the hole or the tube and driving the rollers 22, the object of movement inside the hole or the tube is achieved. Thus, the body 41 is moved inside the hole or the tube, and size and position information of a detection target is obtained by the detection module 43, thereby achieving the object of detection and measurement of damaged holes or cracks inside the hole or the tube, or conditions inside the hole or the tube.

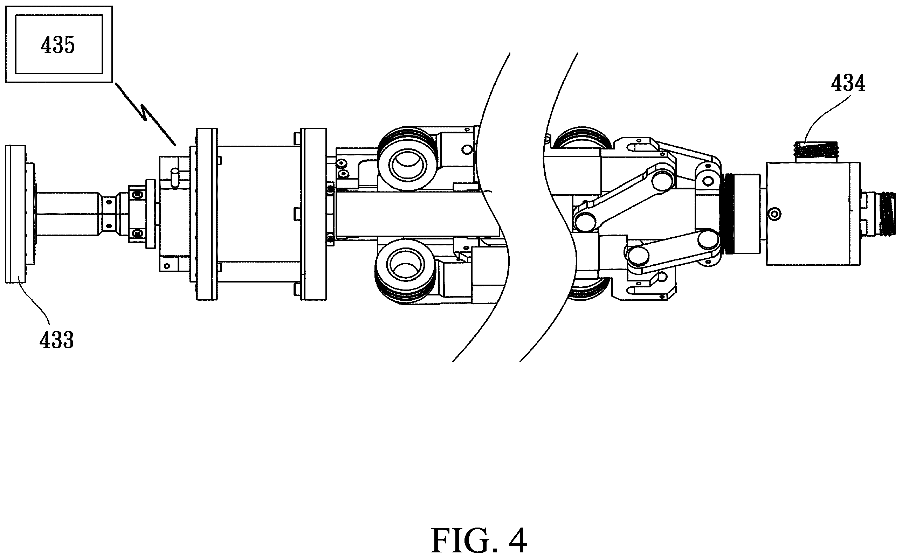

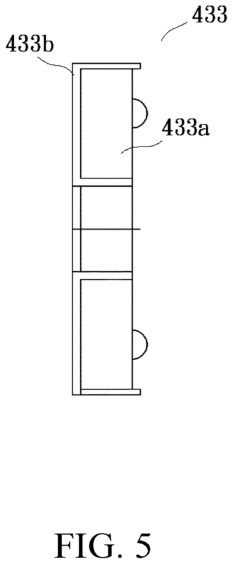

FIG. 4 shows a schematic diagram of a detection module of an image detection system of the present invention. As shown in the drawing, the detection module 43 includes a lighting unit 433, a side-view imaging unit 434 and an image display unit 435. A fixing terminal 433a is formed on one side of the lighting unit 433, and a lighting operating terminal 433b is formed on the other side. As shown in FIG. 5, the lighting operating terminal 433b is movably fixed at the fixing terminal 433a, and is further movably fixed at the fixing unit 45 through the fixing terminal 433b. The image display unit 435 is a light-emitting diode (LED) screen. The side-view imaging unit 434 is a laser ranging apparatus. Images inside the hole or the tube are obtained by the image display unit 435, the position of a target and the distance of a travel position of the body 41 are measured by the side-view imaging unit 434, thus achieving the objects of detection and measurement.

The aforementioned exemplary embodiments are for illustrating features and effects of the present invention and are not to be construed as limitations of the range of the substantial technical contents of the present invention. Without departing from the spirit and scope of the present invention, modifications and variations can be made to the embodiments described above by a person skilled in the art. Therefore, the protection scope of the present invention should be accorded with the appended claims.

## Claims

1. An image detection system, for detecting conditions inside a hole or a tube, the system comprising:
a body (41), comprising a rod body (21) having a detection terminal (44a) and a control terminal (44b), and at least one fixing unit (45) fixed at the rod body (21);
a movement module (42), provided between the detection terminal (44a) and the control terminal (44b); and
a detection module (43), provided at the detection terminal (44a) of the rod body (21), the detection module (43) comprising a plurality of imaging units (431), a detection unit and a control unit (432), wherein the imaging units (431) are arranged at the detection terminal (44a) in a manner of surrounding the rod body (21), the imaging units (431) obtain images inside the hole or the tube, the movement module (42) moves the body (41) inside the hole or the tube, and the detection unit obtains size and position information of a detection target, thereby achieving detection and measurement of damaged holes or cracks inside the hole or the tube, or conditions inside the hole or the tube.

2. The image detection system of claim 1, wherein the movement module (42) comprises at least one link rod unit (421), a plurality of rollers (422) provided on one end of the link rod unit (421), and a driver unit (423) connected to the rollers (422).

3. The image detection system of claim 2, wherein the link rod unit (421) is adjustable according to a size of the hole or the tube that is measured, thereby placing the body (41) at a center position of the hole or the tube.

4. The image detection system of claim 2, wherein the movement module (42) moves inside the hole or the tube through the rollers (422).

5. The image detection system of claim 1, wherein the detection module (43) comprises a lighting unit (433), a fixing terminal (433a) is formed on one side of the lighting unit (433) and one other side is a lighting operating terminal (433b), and the lighting operating terminal (433b) is movably fixed at the fixing terminal (433a) and is movably fixed at the fixing unit (45) through the fixing terminal (433a).

6. The image detection system of claim 1, wherein the detection module (43) comprises a side-view imaging unit (434) and an image display unit (435).

7. The image detection system of claim 1, wherein the side-view imaging unit (434) is a laser ranging apparatus, the imaging units (431) obtain an image of a distance of a travel position of a target measured by the laser ranging apparatus inside the hole or the tube, and a size of the target is obtained by the imaging units (431), thereby achieving detection and measurement.

8. The image detection system of claim 6, wherein the image display unit (435) is a light-emitting diode (LED) screen.

9. The image detection system of claim 1, wherein the image detection system comprises a control unit (432).

10. The image detection system of claim 9, wherein the control unit (432) is electrically connected to the movement module (42) and the detection module (43), the image display unit (435) obtains the conditions inside the hole or the tube, and the detection module (43) is moved by the movement module (42) to arrive at a position of a target, achieving detection and measurement of the damaged holes or cracks inside the hole or the tube, or the conditions inside the hole or the tube.
